# EUROPÄISCHE PATENTSCHRIFT

(11) **EP 4 671 058 B1**
(45) Veröffentlichungstag und Bekanntmachung des Hinweises auf die Patenterteilung: **01.07.2026**
(21) Anmeldenummer: 24200649.2
(22) Anmeldetag: 16.09.2024
(51) Int. Cl.: B60S 1/08, G01N 21/552, G01N 21/94

(54) **REGENSENSOR MIT VERSCHMUTZUNGSERKENNUNG DURCH ABSOLUT- / DIFFERENZ-KOMBIMESSUNG**
RAIN SENSOR WITH DETECTION OF POLLUTION BY ABSOLUTE/DIFFERENTIAL COMBINATION MEASUREMENT
CAPTEUR DE PLUIE AVEC DÉTECTION DE POLLUTION PAR MESURE DE COMBINAISON ABSOLUE/DIFFÉRENTIELLE

(30) Priorität: 25.06.2024 DE 102024117924; 12.07.2024 DE 102024002545; 01.08.2024 DE 102024122053
(43) Veröffentlichungstag der Anmeldung: 31.12.2025
(73) Patentinhaber: Elmos Semiconductor SE, 51379 Leverkusen (DE)
(72) Erfinder: Arnold, Rüdiger, 10405 Berlin (DE); Cwiklinski, Michal, 14612 Falkensee (DE); Dittrich, Stephan, 10785 Berlin (DE); Nebeling, Andreas, 41812 Erkelenz (DE)
(74) Vertreter: Wenzel Nemetzade Warthmüller Patentanwälte Part mbB

(56) Entgegenhaltungen:
- EP-A2- 1 457 763
- EP-B1- 0 706 648
- WO-A1-00/78582
- DE-A1- 102006 044 792
- DE-A1- 102017 101 257
- DE-T2- 69 004 346
- JP-A- 2007 139 659
- US-A- 6 153 995
- TRIERWEILER MANUEL ET AL: "Automotive LiDAR pollution detection system based on total internal reflection techniques", SPIE PROCEEDINGS; [PROCEEDINGS OF SPIE ISSN 0277-786X], SPIE, US, vol. 11302, 25 February 2020 (2020-02-25), pages 1130216 - 1130216, XP060128729, ISBN: 978-1-5106-3673-6, DOI: 10.1117/12.2538416

## Beschreibung

### Feld der Erfindung

Die Erfindung richtet sich auf einen Regensensor für ein Fahrzeug mit Verschmutzungs- und Benetzungserkennung.

### Allgemeine Einleitung

Die vorliegende Erfindung betrifft einen Regensensor für Kraftfahrzeuge, der die Feuchtigkeit auf der Windschutzscheibe misst und Informationen zur Steuerung der Scheibenwischer sowie anderer fahrzeuginterner Systeme bereitstellt. Insbesondere betrifft die Erfindung ein System, das mittels modulierter Lichtstrahlen und einer Steuervorrichtung die Wahrscheinlichkeit und Intensität von Regen sowie die Verschmutzung der Windschutzscheibe erkennt.

### Stand der Technik

Die noch unveröffentlichte deutsche Patentanmeldung DE 10 2024 119 936.9 beschreibt einen Regensensor nach dem Halios-Prinzip, bei dem das Wechselsignal im Fotodetektor nicht auf null sondern einen vorbestimmten Wert geregelt wird, sodass der Differenz- und Summenanteil bestimmt werden können. Das hier vorgelegte Dokument ist eine Weiterentwicklung der dort vorgelegten Technologie, indem es die ermittelten Werte anwendet. Das Dokument WO0078582 A1 offenbart einen Regensensor zur Detektion von Feuchtigkeitstropfen innerhalb eines Bereichs auf einer lichtdurchlässigen Scheibe, mit mindestens einem Sendeelement zum Aussenden optischer Strahlen in die Scheibe und mit mindestens einem Empfangselement zum Empfangen zumindest eines Teils der ausgesandten optischen Strahlen, wobei die Intensität der empfangenen optischen Strahlen abhängig ist von der Anzahl der Feuchtigkeitstropfen in dem von dem Regensensor betrachteten Bereich der Scheibe.

Im Stand der Technik sind eine Erkennung von Verschmutzungen und die geleichzeitige sicher Erkennung von Benetzungen nicht möglich.

### Aufgabe

Dem Vorschlag liegt daher die Aufgabe zugrunde, eine Lösung zu schaffen, die eine Erkennung von Verschmutzungen und die geleichzeitige sicher Erkennung von Benetzungen ermöglicht und weitere Vorteile aufweist.

Diese Aufgabe wird durch die technische Lehre der unabhängigen Ansprüche gelöst. Weitere Ausgestaltungen sind ggf. Gegenstand von Unteransprüchen.

### Lösung der Aufgabe

### Regensensor für ein Kraftfahrzeug

Der Regensensor umfasst eine erste Strahlungsquelle, die zumindest eine erste LED oder eine erste Laserdiode umfasst, und eine zweite Strahlungsquelle, die zumindest eine zweite LED oder eine zweite Laserdiode umfasst. Die erste Strahlungsquelle und zweite Strahlungsquelle dienen dazu, modulierte Messstrahlungen in optische Übertragungsstrecken einzuspeisen, die durch die Windschutzscheibe eines Fahrzeugs verlaufen. Diese Übertragungsstrecken sind so konzipiert, dass sie jeweils durch eine bestimmte Stelle der Windschutzscheibe geführt werden, wodurch eine Messung der durch Regentropfen oder andere Verunreinigungen verursachten Veränderungen der Messstrahlungen möglich wird.

Der Regensensor umfasst weiterhin zumindest einen Fotodetektor und/oder ein Fotodetektor-Array, wie beispielsweise eine Fotodiode oder ein Fotodioden-Array, das die veränderten Messstrahlungen empfängt und in ein oder mehrere elektrische Empfangssignale umwandelt. Die empfangenen Signale werden dann von einer Steuervorrichtung analysiert, die ein Rechnersystem mit einer CPU sowie flüchtigen und nichtflüchtigen Speichern umfasst. Diese Steuervorrichtung ist dazu eingerichtet, die Modulationssignale für die Strahlungsquellen zu erzeugen, die empfangenen Signale zu verarbeiten und aus den Ergebnissen Rückschlüsse auf die Regenintensität und die Beschaffenheit der Windschutzscheibe zu ziehen.

Die optischen Übertragungsstrecken leiten das modulierte Licht der Strahlungsquellen durch die Windschutzscheibe. Jede Übertragungsstrecke ist so positioniert, dass sie an einer spezifischen Stelle der Windschutzscheibe entlangführt. Dabei kann es sich um separate Glasfasern handeln oder um integrierte optische Systeme, die das Licht entsprechend lenken. Die erste Übertragungsstrecke durchdringt eine erste Stelle der Windschutzscheibe, während die zweite Übertragungsstrecke eine zweite Stelle durchdringt. Durch diese Anordnung können Messungen an unterschiedlichen Bereichen der Windschutzscheibe vorgenommen werden, was eine differenzierte Analyse der Regenintensität und der Verschmutzungszustände ermöglicht.

Die von den Strahlungsquellen ausgesendeten Messstrahlungen werden jeweils mit einem Amplitudenmodulationssignal moduliert. Das erste Amplitudenmodulationssignal moduliert die erste Messstrahlung, die durch die erste optische Übertragungsstrecke geleitet wird, während das zweite Amplitudenmodulationssignal die zweite Messstrahlung in der zweiten optischen Übertragungsstrecke moduliert. Diese Modulation ermöglicht es, die empfangenen Signale eindeutig den entsprechenden Strahlungsquellen zuzuordnen und Störsignale zu unterdrücken.

Die Messstrahlungen werden durch Regentropfen, Verschmutzungen oder andere Veränderungen auf der Windschutzscheibe beeinflusst. Diese Veränderungen führen zu einer Dämpfung oder Abweichung der Messstrahlungen, die vom Fotodetektor oder Fotodetektor-Array erfasst werden. Die resultierenden Empfangssignale werden an die Steuervorrichtung übermittelt, die sie verarbeitet und analysiert.

Die Steuervorrichtung ist in der Lage, aus den empfangenen Signalen sowohl ein erstes Messwertsignal und/oder erste Messwerte für die Dämpfung der ersten Übertragungsstrecke als auch ein zweites Messwertsignal und/oder zweite Messwerte für die Dämpfung der zweiten Übertragungsstrecke zu erzeugen. Durch Differenzbildung zwischen den Messwertsignalen und/oder Messwerten kann die Steuervorrichtung ein Maß für die Wahrscheinlichkeit einer Beregnung ableiten. Außerdem ist es möglich, durch Summenbildung der Messwerte ein Maß für die Dämpfung der Windschutzscheibe zu bestimmen, um beispielsweise Verschmutzungen oder Tau auf der Scheibe zu erkennen.

Die zentrale Steuervorrichtung des Regensensors besteht aus einem Rechnersystem, das eine CPU, flüchtige und nichtflüchtige Speicher umfasst. Diese Recheneinheit führt ein computerimplementiertes Verfahren aus, um die empfangenen Signale zu verarbeiten und die erforderlichen Steuerbefehle zu generieren. Der Programmspeicher enthält den Code, der die Funktionalitäten der Signalmodulation, Signalverarbeitung, und Analyse der Messwerte implementiert.

Das Rechnersystem der Steuervorrichtung ist nicht nur für die Verarbeitung der Sensordaten zuständig, sondern auch für die Verwaltung der Kommunikation mit anderen Fahrzeugkomponenten. Es unterstützt die verschlüsselte Übertragung von Steuerungs- und Sensordaten, was die Sicherheit des Systems erhöht. Darüber hinaus kann die Steuervorrichtung mit anderen Systemen des Fahrzeugs interagieren, etwa um Scheibenwischerbewegungen zu steuern oder um Warnsignale bei starkem Regen auszulösen.

Der Regensensor ist so konzipiert, dass Software-Updates und Konfigurationsänderungen einfach durchgeführt werden können. Die Steuervorrichtung unterstützt das Herunterladen und Installieren von Software-Updates, die drahtlos über Mobilfunk- oder WLAN-Verbindungen empfangen werden können. Diese Updates können sowohl die Funktionalität des Sensors verbessern als auch neue Funktionen hinzufügen, die beispielsweise die Sensorempfindlichkeit oder die Datenverarbeitung betreffen.

Zusätzlich ermöglicht die Steuervorrichtung die Speicherung von Konfigurationsdaten und deren Übertragung an den Regensensor. Dies kann über eine direkte Schnittstelle oder über eine drahtlose Verbindung erfolgen. Die Konfiguration des Sensors kann somit angepasst werden, um ihn an spezifische Umgebungsbedingungen oder an verschiedene Fahrzeugmodelle anzupassen.

Das Rechnersystem des Regensensors umfasst Speicher für die Aufzeichnung von Langzeitdaten, die es ermöglichen, Veränderungen in den Umgebungsbedingungen und der Sensorleistung über einen längeren Zeitraum zu analysieren. Diese Daten können genutzt werden, um die Funktionalität des Sensors zu optimieren und um mögliche Fehlfunktionen frühzeitig zu erkennen.

Die Steuervorrichtung kann die aufgezeichneten Daten auch nutzen, um zukünftige Wetterbedingungen vorherzusagen, indem sie Muster in den vergangenen Sensordaten erkennt. Dies kann beispielsweise dazu beitragen, die Scheibenwischersteuerung präziser an die bevorstehenden Wetterverhältnisse anzupassen.

Der Regensensor ist darauf ausgelegt, in moderne vernetzte Fahrzeugsysteme integriert zu werden. Die Steuervorrichtung ist mit Schnittstellen ausgestattet, die eine Kommunikation mit dem Datenbus des Fahrzeugs ermöglichen. Dadurch können Sensordaten in Echtzeit an andere Systeme im Fahrzeug übertragen werden, wie etwa an das Navigationssystem, die Klimaanlage oder Fahrerassistenzsysteme.

Diese Integration ermöglicht es, dass der Regensensor nicht isoliert arbeitet, sondern als Teil eines umfassenden Systems zur Fahrzeugüberwachung und -steuerung fungiert. Die Steuervorrichtung kann zudem auf externe Datenquellen zugreifen, etwa auf GPS-Daten, um standortabhängige Wetterinformationen in die Sensoranalyse einfließen zu lassen.

Der Regensensor kann direkt oder indirekt über Server Vorrichtungen der Umgebung z.B. Waschanlagen beeinflussen und anderen Fahrzeugen Hinweise geben.

Der Regensensor verfügt über zahlreiche erweiterte Funktionen, die ihn besonders vielseitig und anpassungsfähig machen. Dazu gehört beispielsweise die Möglichkeit, die Sensordaten über eine Smartphone-App anzuzeigen und den Sensor zu steuern. Auch die Kommunikation mit Cloud-Diensten zur Speicherung und Analyse von Sensordaten wird unterstützt. Dies ermöglicht eine kontinuierliche Verbesserung der Sensorleistung durch datenbasierte Optimierungen.

Ein weiterer wichtiger Aspekt ist die adaptive Sensoreinstellung, die es ermöglicht, die Sensorempfindlichkeit und -funktionalität automatisch an verschiedene Witterungsbedingungen und Verschmutzungsgrade der Windschutzscheibe anzupassen. Diese Anpassungen können in Echtzeit erfolgen, basierend auf den aktuellen Messwerten und den gespeicherten historischen Daten.

Die Steuervorrichtung des Regensensors verfügt über umfangreiche Diagnosefunktionen, die sicherstellen, dass der Sensor jederzeit korrekt funktioniert. Beim Start des Fahrzeugs führt das System einen automatischen Selbsttest durch, um sicherzustellen, dass alle Komponenten ordnungsgemäß arbeiten. Bei einer erkannten Fehlfunktion kann das System entweder einen sicheren Modus aktivieren oder eine Warnung an den Fahrer ausgeben.

Zusätzlich ermöglicht die Diagnose-Schnittstelle der Steuervorrichtung den Anschluss externer Geräte, um detaillierte Fehleranalysen durchzuführen. Dies kann beispielsweise über eine USB-Schnittstelle oder drahtlos über Bluetooth oder WLAN erfolgen.

Der Regensensor ist darauf ausgelegt, energieeffizient zu arbeiten. Die Strahlungsquellen sind mit einem automatischen Energiesparmodus ausgestattet, der die Leistung reduziert, wenn keine Regenaktivität festgestellt wird. Dadurch wird der Energieverbrauch minimiert, was besonders in Fahrzeugen mit elektrischer Energieversorgung vorteilhaft ist.

Durch die Ausregelung des Wechselsignalanteils der Bestrahlung des Fotodetektors auf nahezu null, wenn die erste Modulationsstrahlung komplementär zur zweiten Modulationsstrahlung moduliert ist und durch Ausregelung derer Amplituden zu einer Summeneinstrahlung von nahezu Null des Wechselsignalanteils kann der vorschlagsgemäße Regensensor mit einem sehr geringen Energieaufwand seine Messungen durchführen.

Die Steuervorrichtung überwacht kontinuierlich den Energieverbrauch des Sensors und passt die Betriebsmodi entsprechend an, um eine optimale Balance zwischen Leistungsfähigkeit und Energieeinsparung zu erreichen.

Die Sicherheit des Regensensors wird durch die Implementierung von Verschlüsselungsprotokollen in der Steuervorrichtung gewährleistet. Dies betrifft sowohl die Kommunikation mit anderen Fahrzeugkomponenten als auch die Übertragung von Daten über externe Netzwerke. Dadurch wird sichergestellt, dass unbefugter Zugriff auf die Sensordaten verhindert wird und die Integrität der übertragenen Informationen gewahrt bleibt.

Der Regensensor ist modular aufgebaut, was eine einfache Anpassung und Erweiterung der Funktionalität ermöglicht. Dies betrifft sowohl die Hardwarekomponenten wie die Strahlungsquellen und Fotodetektoren als auch die Softwarekomponenten der Steuervorrichtung. Durch den modularen Aufbau kann der Sensor problemlos an verschiedene Fahrzeugmodelle und spezifische Anforderungen angepasst werden.

Ein wesentlicher Bestandteil des Regensensors ist die Fähigkeit, nicht nur die Anwesenheit von Regen zu erkennen, sondern auch die Intensität und die Auswirkungen von Verschmutzungen auf der Windschutzscheibe zu analysieren. Die Steuervorrichtung ist mit Algorithmen ausgestattet, die aus den empfangenen Signalen komplexe Analysen durchführen, um genaue Messwerte zu liefern. Diese Daten können genutzt werden, um die Scheibenwischerbewegungen zu optimieren und um den Fahrer über den Zustand der Windschutzscheibe zu informieren.

Der Regensensor ist darauf vorbereitet, Daten mit externen Systemen und Cloud-Diensten zu teilen. Dies ermöglicht eine kontinuierliche Überwachung und Verbesserung des Sensors durch die Analyse großer Datenmengen in der Cloud. Zudem können Updates und neue Konfigurationen direkt aus der Cloud auf den Sensor übertragen werden, was die Flexibilität und Anpassungsfähigkeit des Systems erhöht.

Die beschriebenen Funktionen des Regensensors können auch für spezielle Anwendungen angepasst werden. Beispielsweise kann der Sensor für den Einsatz in autonomen Fahrzeugen modifiziert werden, wo eine präzise Erkennung von Witterungsbedingungen für die Fahrzeugsicherheit entscheidend ist. Auch für Nutzfahrzeuge oder in speziellen klimatischen Bedingungen kann der Sensor entsprechend konfiguriert werden, um optimale Leistung zu gewährleisten.

Die Architektur des Regensensors erlaubt es, zukünftige Erweiterungen und Verbesserungen leicht zu integrieren. Neue Technologien wie die Integration von Künstlicher Intelligenz (KI) zur Verbesserung der Datenanalyse oder die Verwendung von erweiterten Sensoren zur Erkennung weiterer Umgebungsparameter können einfach implementiert werden. Dadurch bleibt der Regensensor auch in Zukunft ein leistungsfähiges und anpassungsfähiges System zur Unterstützung moderner Fahrzeugtechnologien.

Die Steuervorrichtung kann dazu eingerichtet sein, - mittels verschlüsselte Datenkommunikation insbesondere mittels computer- und/oder maschinenimplementierter Verschlüsselungsverfahren Steuerungs- und Sensordaten zu übertragen und/oder Steuerungsdaten und/oder Programmcode zu empfangen, - Software-Updates insbesondere der computer- und/oder maschinenimplementierten Verfahren insbesondere verschlüsselt und/oder insbesondere authentifiziert zu empfangen und zu installieren, - die Konfiguration des Regensensors zu identifizieren, - Konfigurationsdaten des Regensensors insbesondere verschlüsselt und/oder insbesondere authentifiziert zu empfangen und diese anzuwenden, - dass die Steuervorrichtung Zugriff auf einen oder mehrere Datenbusse des Fahrzeugs hat, - dass die Steuervorrichtung eine maschinenlesbare Schnittstelle zur insbesondere verschlüsselten und/oder insbesondere authentifizierten Kommunikation mit anderen Fahrzeugkomponenten des Fahrzeugs umfasst, - über eine oder mehrere drahtlose Schnittstellen, insbesondere über Bluetooth oder WLAN oder Licht oder IR-Strahlung, mit einer oder mehreren externen Vorrichtungen kommunizieren zu können, und/oder - in Echtzeit Daten zur Beregnungswahrscheinlichkeit an eine Fahrzeugsteuerungseinheit zu übermitteln. Die Steuervorrichtung kann dazu eingerichtet sein, über eine oder mehrere drahtlose Schnittstellen, insbesondere über Bluetooth oder WLAN oder Licht oder IR-Strahlung, mit einer oder mehreren externen Vorrichtungen kommunizieren zu können, und/oder in Echtzeit Daten zur Beregnungswahrscheinlichkeit an eine Fahrzeugsteuerungseinheit zu übermitteln. Die erste und zweite Strahlungsquelle kann dazu eingerichtet sein, im Infrarotbereich zu arbeiten. Ein oder mehrere optischen Übertragungsstrecken können Glasfaserkabel und/oder Lichtwellenleiter umfassen. Ein oder mehrere Fotodetektoren können einen Fotomultiplier oder eine Fotodiode oder eine SPAD-Diode oder eine AVD-Diode oder eine PN-Diode umfassen. Die Steuervorrichtung kann über eine CPU und/oder einen Zusatz-Prozessor zur Durchführung einer computer- oder maschinenimplementierten Fourier- und/oder Hüllkurvenspektralanalyse Analyse des zeitlichen Verlaufs der Empfangssignale des einen oder der mehreren Fotodetektoren und/oder Fotodetektoren-Arrays und/oder zur Durchführung einer computer- oder maschinenimplementierten Wavelet-Analyse des zeitlichen Verlaufs der Empfangssignale des einen oder der mehreren Fotodetektoren und/oder Fotodetektoren-Arrays verfügen. Die Steuervorrichtung kann dazu eingerichtet sein, eine computer- oder maschinenimplementierte Funktion zur Kalibrierung des Sensors auszuführen. Das Verfahren kann als computerimplementiertes- und/oder maschinenimplementiertes Verfahren insbesondere auf einer CPU der Steuervorrichtung, insbesondere durch Ausführung von Programmcode im Speicher der Steuervorrichtung, ausgeführt werden. Das Verfahren kann in Abhängigkeit von empfangenen Fahrzeugdaten ausgeführt werden. Das computer- und/oder maschinenimplementiertes Verfahren kann über ein Computerprogramm implementiert sein, wobei insbesondere dessen Programmcode in einem Speicher der Steuervorrichtung gespeichert ist. Es wird Computerprogrammprodukt offenbart, umfassend Programmcodes, die bei Ausführung auf einer CPU einer Vorrichtung wie oben beschrieben ein Verfahren wie oben beschrieben zur Ausführung bringen. Das Computerprogrammprodukt kann als Ganzes oder in Teilen als Download bereitgestellt werden, wobei diese Teile des Computerprogrammprodukts Betriebsparameter des Computerprogrammprodukts umfassen können. Das Computerprogrammprodukt kann ein verschlüsseltes Kommunikationsprotokoll zur Datenübertragung und Steuerung des Regensensors insbesondere für die CPU der Steuervorrichtung und/oder eine Datenschnittstelle der Steuervorrichtung des Regensensors implementieren. Die Strahlungsquellen können orthogonal zur Windschutzscheibe und/oder in einem Winkel von 45° zur Windschutzscheibe abstrahlen. Die Strahlungsquellen und/oder Fotodetektoren können in einem Gehäuse untergebracht sein, das an der Innenseite der Windschutzscheibe befestigt ist. Die Steuervorrichtung kann eine Fehlererkennungseinheit umfassen, die Abweichungen in den Empfangssignalen detektiert. Die Steuervorrichtung kann eine physikalische und/oder informationstechnische (logische) Datenschnittstelle zur Integration in ein Fahrerassistenzsystem umfassen. Die erste und zweite Messstrahlung kann mit unterschiedlichen Wellenlängen arbeiten. Die Steuervorrichtung des Regensensors kann für die Durchführung einer Selbstdiagnose des Regensensors eingerichtet sein. Das Verfahren kann nach einem Neustart des Fahrzeugs automatisch aktiviert werden. Die Steuervorrichtung kann dazu eingerichtet sein, Sensordaten des Regensensors für statistische Auswertungen zu speichern, eine computer- oder maschinenimplementierte Korrekturfunktion für optische Verzerrungen durch die Windschutzscheibe auszuführen, über einen Diagnosestecker mit einem externen Gerät verbunden werden zu können, um Fehlerdiagnosen insbesondere mittels computer- oder maschinenimplementierter Verfahren durchzuführen, mittels computer- oder maschinenimplementierter Verfahren, die insbesondere die CPU der Steuervorrichtung ausführt, adaptiv auf unterschiedliche Witterungsbedingungen zu reagieren, um die Empfindlichkeit des Regensensors und/oder das Verhalten des Regensensors mittels computeroder maschinenimplementierter Verfahren anzupassen, einen automatischen, insbesondere computer- oder maschinenimplementierten Selbsttest des Systems des Regensensors beim Einschalten des Fahrzeugs und/oder nach Empfang eines Datenbuskommandos und/oder als Ergebnis eines computer- oder maschinenimplementierten Verfahrens durchzuführen, ein Kommunikationsprotokoll zur drahtlosen Übertragung von Sensordaten an mobile Endgeräte und insbesondere über andere Rechnerknoten des Fahrzeugs zu unterstützen, und/oder eine automatische Anpassung mittels eines computer- und/oder maschinenimplementierten Verfahrens, insbesondere unter Nutzung eines oder mehrerer ermittelter Maße für die Dämpfung der Windschutzscheibe, an verschiedene Windschutzscheibengeometrien ermöglicht. Die Steuervorrichtung kann über ein Update-System verfügen, das drahtlos Software-Updates empfängt und installiert. Die Strahlungsquellen können als gepulste Lichtquellen, insbesondere mittels einer Pulsmodulierten Intensitätsmodulation wie beispielsweise PWM (Pulsweitenmodulation) , PDM (Pulsdichtemodulation), PFM (Pulsfrequenzmodulation), betrieben werden, um eine höhere Signalstärke zu erreichen, können insbesondere durch die die CPU der Steuervorrichtung und insbesondere unter Nutzung eines computer- und/oder maschinenimplementierten Algorithmus, in Abhängigkeit von den Umgebungslichtverhältnissen automatisch eingeschaltet oder ausgeschaltet und/oder in ihrer Helligkeit und/oder in ihrer Modulation geregelt werden, können in einem festen Zeitintervall, insbesondere mit einer PWM-Periode, gepulst und/oder insbesondere mit einer Trägerfrequenzperiode zumindest teilweise sinusförmig modelliert werden, um eine Synchronisation mit einem oder mehreren Fotodetektoren und/oder Fotodetektoren-Arrays zu gewährleisten, und/oder können mit einem automatischen Energiesparmodus ausgestattet sind, der die Leistung reduziert, wenn keine Regenaktivität festgestellt wird. Die Steuervorrichtung - kann einen computeroder maschinenimplementierten Algorithmus zur Rauschunterdrückung umfassen, um Störsignale zu minimieren, wobei der computer- oder maschinenimplementierte Algorithmus ein computer- oder maschinenimplementiertes Verfahren der künstlichen Intelligenz und zwar insbesondere ein computer- oder maschinenimplementiertes neuronales Netzwerkmodell umfassen kann, - kann eine Temperaturkompensation für die Strahlungsquellen und Fotodetektoren umfassen, wobei insbesondere die Temperaturkompensation einen computer- oder maschinenimplementierten Algorithmus zur Temperaturkompensation und zwar insbesondere ein computer- oder maschinenimplementiertes Verfahren der künstlichen Intelligenz und zwar insbesondere ein computer- oder maschinenimplementiertes neuronales Netzwerkmodell umfassen kann, - kann eine computer- oder maschinenimplementierte Echtzeituhr umfassen, um zeitliche Veränderungen der Messwerte zu berücksichtigen, - kann eingerichtet sein, eine computer- oder maschinenimplementierte Korrekturfunktion für optische Verzerrungen durch die Windschutzscheibe auszuführen, kann eine computer- oder maschinenimplementierte Schnittstelle zur Integration in ein Navigationssystem des Fahrzeugs umfassen, kann eine Speichereinheit eines Speichers der Steuervorrichtung umfassen, die vergangene Wetterdaten speichert, um Vorhersagen über zukünftige Niederschläge insbesondere mittels computer- oder maschinenimplementierter Verfahren zu treffen, kann dazu eingerichtet sein, über einen Diagnosestecker mit einem externen Gerät verbunden werden zu können, um Fehlerdiagnosen insbesondere mittels computer- oder maschinenimplementierter Verfahren durchzuführen, kann dazu eingerichtet sein, mittels computeroder maschinenimplementierter Verfahren, die insbesondere die CPU der Steuervorrichtung ausführt, adaptiv auf unterschiedliche Witterungsbedingungen zu reagieren, um die Empfindlichkeit des Regensensors und/oder das Verhalten des Regensensors mittels computer- oder maschinenimplementierter Verfahren anzupassen, dazu eingerichtet ist, einen automatischen, insbesondere computer- oder maschinenimplementierten Selbsttest des Systems des Regensensors beim Einschalten des Fahrzeugs und/oder nach Empfang eines Datenbuskommandos und/oder als Ergebnis eines computer- oder maschinenimplementierten Verfahrens durchzuführen, dazu eingerichtet ist, ein Kommunikationsprotokoll zur drahtlosen Übertragung von Sensordaten an mobile Endgeräte und insbesondere über andere Rechnerknoten des Fahrzeugs zu unterstützen, einen Algorithmus zur Mustererkennung umfassen, der die Form und Größe von Regentropfen auf der Windschutzscheibe analysiert, eine Schnittstelle zur Verbindung mit einer Fahrzeugklimaanlage umfassen, um in Abhängigkeit von den Sensorwerten die Lüftung automatisch zu regeln, eine Benutzeroberfläche zur manuellen Kalibrierung der Sensorempfindlichkeit umfassen, die Steuervorrichtung ein Kalibrierungsverfahren unterstützen, das unter verschiedenen Witterungsbedingungen durchgeführt werden kann, einen Algorithmus zur Glättung der Ausgangssignale umfassen, um eine gleichmäßige Scheibenwischerbewegung zu gewährleisten, eine Schnittstelle zur Verbindung mit einem externen GPS-Modul umfassen, um standortabhängige Wetterdaten in die Berechnungen einzubeziehen, in Abhängigkeit von der Geschwindigkeit des Fahrzeugs die Sensorempfindlichkeit anpassen, eine Funktion zur Vorhersage der Regenintensität basierend auf den empfangenen Sensordaten unterstützen, eine Fehlerkorrekturfunktion umfassen, die Fehlmessungen aufgrund von Schmutz auf der Windschutzscheibe erkennt und kompensiert, eine Schnittstelle zur Integration in ein Fahrzeugüberwachungssystem umfassen, das die Sensorfunktion kontinuierlich überwacht, ein Modul zur Analyse von Blitzereignissen umfassen, um vor Blitzschlägen zu warnen, einen Speicher für die Aufzeichnung von Langzeitdaten umfassen, um langfristige Änderungen in der Funktion des Sensors zu analysieren, über eine Sicherheitsfunktion verfügen, die bei einer erkannten Fehlfunktion des Sensors das Fahrzeug in einen sicheren Modus versetzt, eine Verbindung zu einem Fahrzeugnetzwerk herstellen, um Sensordaten mit anderen Fahrzeugen und/oder Servern außerhalb des Fahrzeugs, insbesondere über meteorologische Daten und/oder Umweltdaten auszutauschen, eine Funktion zur automatischen Kalibrierung der Strahlungsquellen in Abhängigkeit von der Lebensdauer der LEDs umfassen, die Möglichkeit bieten, über eine Smartphone-App und/oder ein computerimplementiertes Verfahren einer anderen mobilen Vorrichtung mit einer Mensch-Maschine-Schnittstelle (HMI) gesteuert zu werden, mit einem computer- und/oder maschinenimplementierten Algorithmus zur Erkennung von Schnee und/oder Eis auf der Windschutzscheibe ausgestattet sein, mit einem computer- und/oder maschinenimplementierten Algorithmus zur Bestätigung einer Scheibenwaschvorrichtung und/oder einer funktionsäquivalenten Vorrichtung in Abhängigkeit von dem Erkennungsergebnis des computer- oder maschinenimplementierten Verfahrens zur Erkennung von Staub auf der Windschutzscheibe ausgestattet sein, mit einem computer- und/oder maschinenimplementierten Algorithmus zur Bestätigung einer Scheibenwaschvorrichtung und/oder einer funktionsäquivalenten Vorrichtung in Abhängigkeit von einem oder mehreren Erkennungsergebnissen des computer- oder maschinenimplementierten Verfahrens zur Erkennung von Staub auf der Windschutzscheibe zumindest zeitweise auf den Gesamtverschmutzungszustand des Fahrzeugs in Form eines Messwert des geschätzten Gesamtverschmutzungszustands schließen, einen oder mehrere Messwerte des geschätzten Gesamtverschmutzungszustands in einem Speicher der Steuervorrichtung, insbesondere mit einem Zeitstempel des Zeitpunkts der Messung, speichern, den einen oder die mehrere Messwerte des geschätzten Gesamtverschmutzungszustands und/oder insbesondere einen oder mehrere Zeitstempel an einen Server über eine Datenüberragungsstrecke übertragen, eine cloudbasierte Datenbank nutzen, um Sensordaten zur Verbesserung zukünftiger Sensorversionen zu analysieren, über eine USB-Schnittstelle verfügen, um Diagnosedaten direkt an einen Computer zu übermitteln, zur Durchführung von Software-Updates der von dem Regensensor ausgeführten computer- oder maschinenimplementierten Verfahren über das Mobilfunknetz eingerichtet sein, dazu eingerichtet sein, eine automatische Anpassung mittels eines computer- und/oder maschinenimplementierten Verfahrens, insbesondere unter Nutzung eines oder mehrerer ermittelter Maße für die Dämpfung der Windschutzscheibe, an verschiedene Windschutzscheibengeometrien ermöglicht, und/oder eine integrierte Notstromversorgung, insbesondere aus einer eigenen Energiereserve wie insbesondere einem Kondensator und/oder einer Spule und/oder einem Akkumulator und/oder einer Batterie und insbesondere zur Meer-Gischt-Detektion insbesondere bei insbesondere unsachgemäßen Schiffstransporten, umfassen. Die Steuereinrichtung kann mit einem computer- und/oder maschinenimplementierten Algorithmus zur Bestätigung einer Scheibenwaschvorrichtung und/oder einer funktionsäquivalenten Vorrichtung in Abhängigkeit von dem Erkennungsergebnis des computer- oder maschinenimplementierten Verfahrens zur Erkennung von Staub auf der Windschutzscheibe ausgestattet sein. Die erste und zweite optische Übertragungsstrecke können jeweils unterschiedliche jeweilige optische Filter umfassen, die jeweils verschiedene jeweilige Wellenlängenbereiche durchlassen. Die optischen Übertragungsstrecken können Linsen enthalten, die die Messstrahlung fokussieren. Die optischen Übertragungsstrecken können ein oder mehrere jeweilige optische Funktionselemente zur Beeinflussung der jeweiligen Messtrahlung in der jeweiligen optischen Übertragungsstrecke umfassen. Die ein oder mehrere optische Übertragungsstrecken können jeweils einen variablen Lichtweg umfassen, der durch einen Aktuator insbesondere durch die CPU der Steuervorrichtung des Regensensors mittels computer- oder maschinenimplementierter Verfahren eingestellt werden kann. Die Strahlungsquellen können, insbesondere durch die die CPU der Steuervorrichtung und insbesondere unter Nutzung eines computer- und/oder maschinenimplementierten Algorithmus, in Abhängigkeit von den Umgebungslichtverhältnissen automatisch eingeschaltet oder ausgeschaltet und/oder in ihrer Helligkeit und/oder in ihrer Modulation geregelt werden. Die Strahlungsquellen können in einem festen Zeitintervall, insbesondere mit einer PWM-Periode, gepulst und/oder insbesondere mit einer Trägerfrequenzperiode zumindest teilweise sinusförmig modelliert werden, um eine Synchronisation mit einem oder mehreren Fotodetektoren und/oder Fotodetektoren-Arrays zu gewährleisten. Die optischen Übertragungsstrecken können mit einer Antireflexionsbeschichtung versehen sind, um Signalverluste zu minimieren. Die optischen Übertragungsstrecken können mit einer Antireflexionsbeschichtung versehen sein, um Signalverluste zu minimieren. Die optischen Übertragungsstrecken können eine variable Fokussierlinse umfassen, die automatisch auf die optimale Position eingestellt wird. Die optischen Übertragungsstrecken können eine variierende Dicke aufweisen, um spezifische Wellenlängen besser zu übertragen. Es wird auch ein Fahrzeug mit einem solchen Regensensor offenbart. Es wird auch Server offenbart, wobei der Server von einem Regensensor wie oben beschrieben einen oder die mehrere Messwerte des geschätzten Gesamtverschmutzungszustands und/oder insbesondere einen oder mehrere Zeitstempel und zumindest eine Ortskoordinate des Fahrzeugs, an dem sich insbesondere das Fahrzeug zu einem Zeitpunkt einer Messung befunden hat, erhält und speichert und/oder verarbeitet. Es wird auch ein Server offenbart, wobei der Server hieraus Daten für die Wahrscheinlichkeit einer Verschmutzung und/oder die wahrscheinliche Art der Verschmutzung auf Fahrstrecken und/oder an bestimmten Orten ermittelt und zur Verfügung stellt und/oder bereithält und/oder speichert und/oder an andere Vorrichtungen übermittelt. Es wird auch eine Garage oder Fahrzeugabstellplatz oder Waschanlage offenbart, wobei diese dazu eingerichtet sind, ein Fahrzeug wie oben beschrieben zu identifizieren und wobei diese dazu eingerichtet sind, Steuerdaten von dem einem oder mehreren Servern wie oben beschrieben zu erhalten und wobei diese dazu eingerichtet sind, einen Waschvorgang in Abhängigkeit von dem einen oder den mehreren Messwerten des geschätzten Gesamtverschmutzungszustands und/oder insbesondere von dem einen oder den mehreren Zeitstempeln, die von einem oder mehreren Regensensoren wie oben beschrieben ermittelt wurden, durchzuführen. Es wird auch ein Steuergerät eines Fahrzeugs wie oben beschrieben offenbart, wobei das Steuergerät als Server wie oben beschrieben arbeitet und wobei das Steuergerät den einen oder die mehrere Messwerte des geschätzten Gesamtverschmutzungszustands und/oder insbesondere einen oder mehrere Zeitstempel von dem Regensensor erhält oder zur Verfügung at und wobei das Steuergerät den einen oder die mehrere Messwerte des geschätzten Gesamtverschmutzungszustands und/oder insbesondere einen oder mehrere Zeitstempel und zumindest eine Ortskoordinate des Fahrzeugs, an dem sich insbesondere das Fahrzeug zu einem Zeitpunkt einer Messung befunden hat, an einen anderen Server über eine Datenüberragungsstrecke überträgt, wobei insbesondere das Steuergerät die Steuervorrichtung des Regensensors sein kann. Der Regensensor kann dazu eingerichtet sein in aufeinanderfolgenden, nicht überlappenden ersten und zweiten Messzyklen zu arbeiten, wobei der Regensensor dazu eingerichtet ist, in den ersten Messzyklen durch Differenzbildung zwischen den ersten und zweiten Messwertsignalen und/oder Messwerten ein Maß für die Wahrscheinlichkeit einer Beregnung abzuleiten, wobei der Regensensor dazu eingerichtet ist, in den ersten Messzyklen durch Summenbildung ein Maß für die Dämpfung der Windschutzscheibe, insbesondere durch Verschmutzung oder insbesondere durch Tau als spezieller Verschmutzung und/oder Vereisung als weiterer spezieller Verschmutzung, abzuleiten.

### Liste der Figuren

Figur 1: Schematische Darstellung eines Regensensors für ein Kraftfahrzeug, umfassend die erste Strahlungsquelle (110), die zweite Strahlungsquelle (120), den Fotodetektor (130), die erste optische Übertragungsstrecke (140), die zweite optische Übertragungsstrecke (150), und die Steuervorrichtung (230).
Figur 2: Blockdiagramm der elektrischen und optischen Komponenten des Regensensors, einschließlich der ersten Strahlungsquelle (110), der zweiten Strahlungsquelle (120), des Fotodetektors (130), der Steuervorrichtung (230) mit CPU (232), flüchtigem Speicher (233), und nichtflüchtigem Speicher (234), sowie der Kommunikationsschnittstelle (340).
Figur 3: Detailansicht der optischen Übertragungsstrecken (140, 150) durch die Windschutzscheibe, einschließlich der ersten Stelle (160) und der zweiten Stelle (170) der Windschutzscheibe, durch die die Messstrahlungen (180, 190) geführt werden.
Figur 4: Schematische Darstellung der Signalverarbeitung in der Steuervorrichtung (230), einschließlich der Erzeugung des ersten Messwertsignals (260) und des zweiten Messwertsignals (270), sowie der Differenzbildungseinheit (300) und der Summenbildungseinheit (310) zur Ableitung des Maßes für die Wahrscheinlichkeit einer Beregnung (320) und des Maßes für die Dämpfung der Windschutzscheibe (330).
Figur 5: Darstellung eines Szenarios, in dem der Regensensor (100) mit einem externen System über die Kommunikationsschnittstelle (340) verbunden ist, um Software-Updates (350) zu empfangen und Konfigurationsdaten zu übertragen.
Figur 6: Funktionsdiagramm des Energiemanagementsystems des Regensensors, einschließlich des Energiesparmodus (390) und der automatischen Anpassung der Strahlungsquellenleistung in Abhängigkeit von der gemessenen Regenintensität.

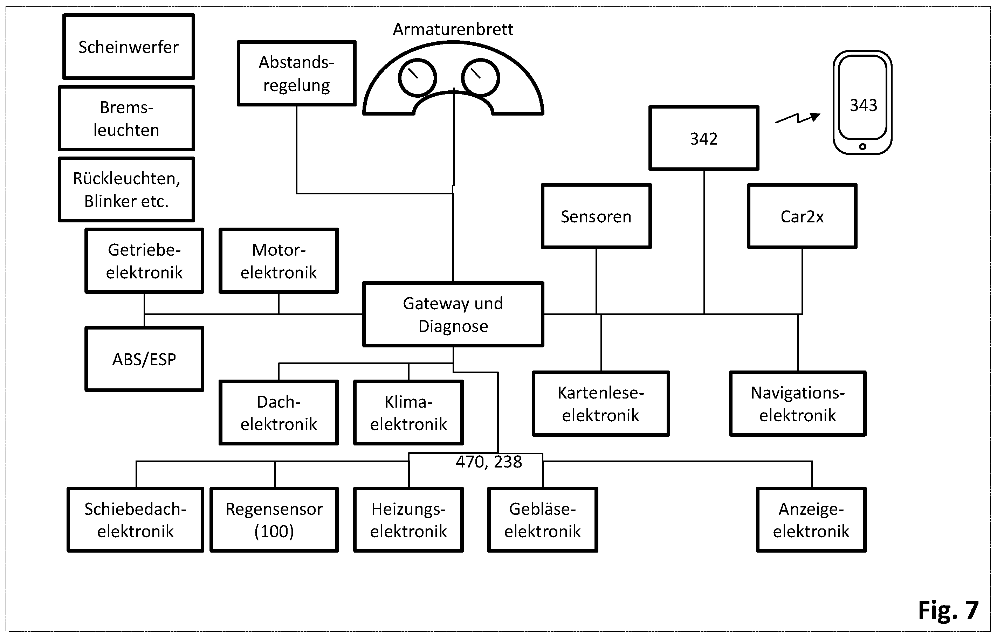

Figur 7: Darstellung der Schnittstelle des Regensensors zu einem Fahrzeugnetzwerk, einschließlich der Interaktion mit dem Datenbus des Fahrzeugs (470) und der Kommunikation mit einem Smartphone über die drahtlose Schnittstelle (342).
Figur 8: Erweiterte Ansicht der optischen Komponenten des Regensensors, einschließlich der Fokussierlinse (420) und der Antireflexionsbeschichtung (440) auf den optischen Übertragungsstrecken.
Figur 9: Beispiel für eine Anwendung des Regensensors in einem autonomen Fahrzeug, das die Daten des Sensors nutzt, um die Scheibenwischer und die Fahrzeuggeschwindigkeit in Abhängigkeit von der erkannten Regenintensität zu steuern.

### Beschreibung der Figuren

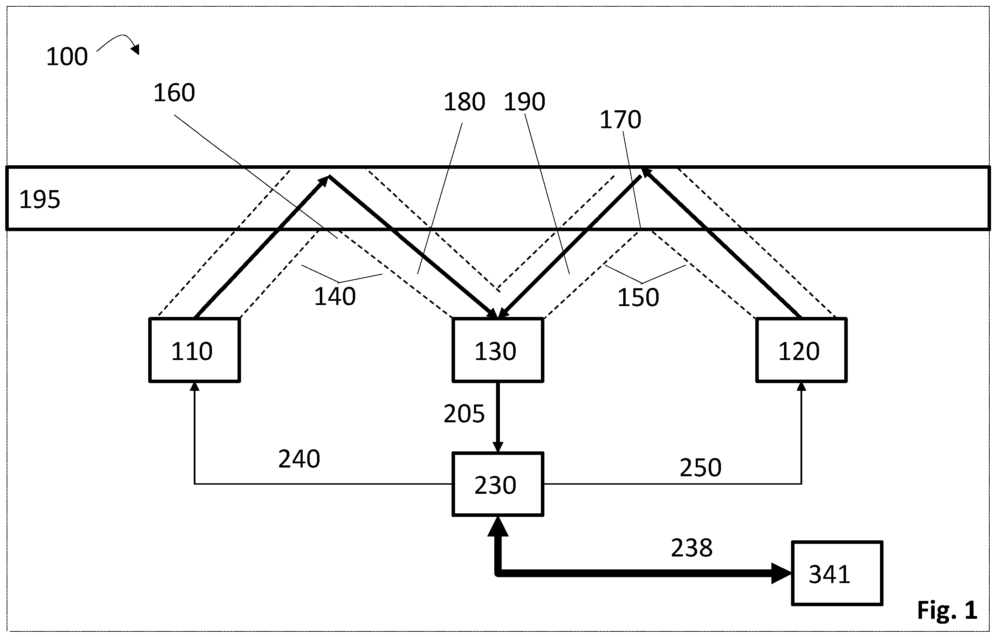

Diese Figur 1 zeigt eine schematische Darstellung eines Regensensors (100) für ein Kraftfahrzeug. Die erste Strahlungsquelle (110) und die zweite Strahlungsquelle (120) sind in optische Übertragungsstrecken (140, 150) integriert, die jeweils durch eine erste Stelle (160) und eine zweite Stelle (170) der Windschutzscheibe (195) geführt werden. Ein Fotodetektor (130) ist angeordnet, um die durch die Windschutzscheibe (195) veränderten Messstrahlungen (180, 190) zu erfassen. Die Empfangssignale (205) werden an die Steuervorrichtung (230) weitergeleitet, die die Signalverarbeitung und Steuerung des Systems des Regensensors (100) übernimmt.

Die Steuervorrichtung (230) erzeugt das erste Modulationssignal (111) zur Steuerung der Strahlungsemission der ersten Strahlungsquelle (110).

Die Steuervorrichtung (230) erzeugt das zweite Modulationssignal (121) zur Steuerung der Strahlungsemission der zweiten Strahlungsquelle (120).

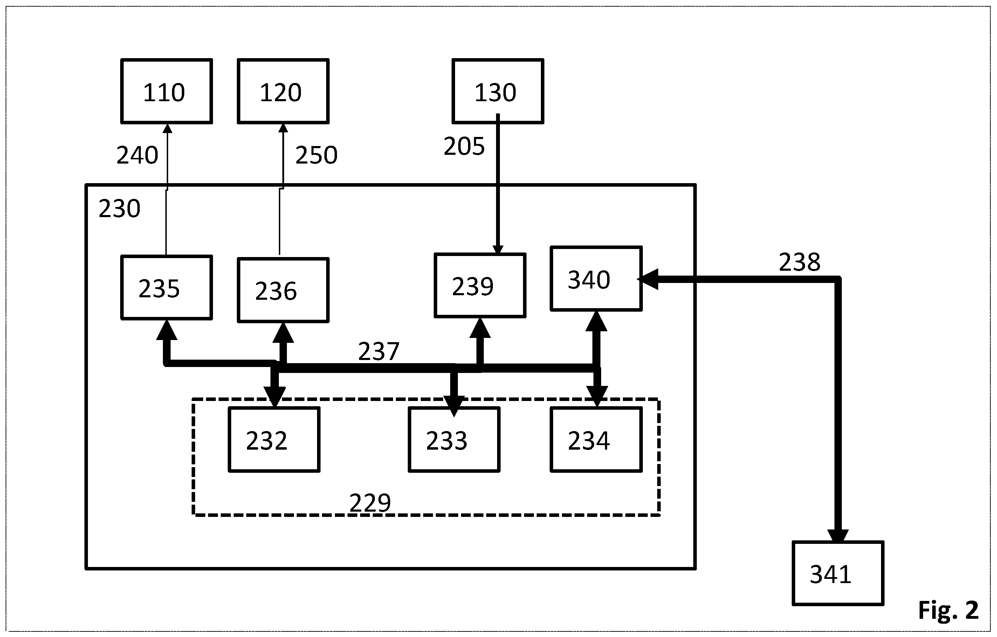

Diese Figur 2 stellt ein Blockdiagramm der elektrischen und optischen Komponenten des Regensensors (100) dar. Die erste Strahlungsquelle (110) und die zweite Strahlungsquelle (120) sind über elektrische Verbindungen, die Empfangssignale (205), mit der Steuervorrichtung (230) verbunden, die eine CPU (232), einen flüchtigen Speicher (233) und/oder einen nichtflüchtigen Speicher (234) umfasst. Die CPU (232) und der flüchtige Speicher (233) und der nichtflüchtige Speicher (234) bilden das Rechnersystem (229). Der Fotodetektor (130) ist ebenfalls über eine Fotodetektorschnittstelle (239) mit der Steuervorrichtung (230) verbunden, die die empfangenen Empfangssignale (205) verarbeitet. Die Kommunikationsschnittstelle (340) ermöglicht die Verbindung der CPU (232) des Regensensors 100 über den internen Datenbus (237) und den externen Datenbus (470) mit externen Systemen (341).

Die Steuervorrichtung (230) erzeugt mittels eines ersten Treibers (235) das erste Amplitudenmodulationssignal (240) zur Steuerung der Strahlungsemission der ersten Strahlungsquelle (110).

Die Steuervorrichtung (230) erzeugt mittels eines zweiten Treibers (236) das zweite Amplitudenmodulationssignal (250) zur Steuerung der Strahlungsemission der zweiten Strahlungsquelle (120).

Die Steuervorrichtung (230) steuert über den Datenbus (237) den ersten Treiber (235).

Die Steuervorrichtung (230) steuert über den Datenbus (237) den zweiten Treiber (236).

Die Steuervorrichtung (230) greift über den Datenbus (237)

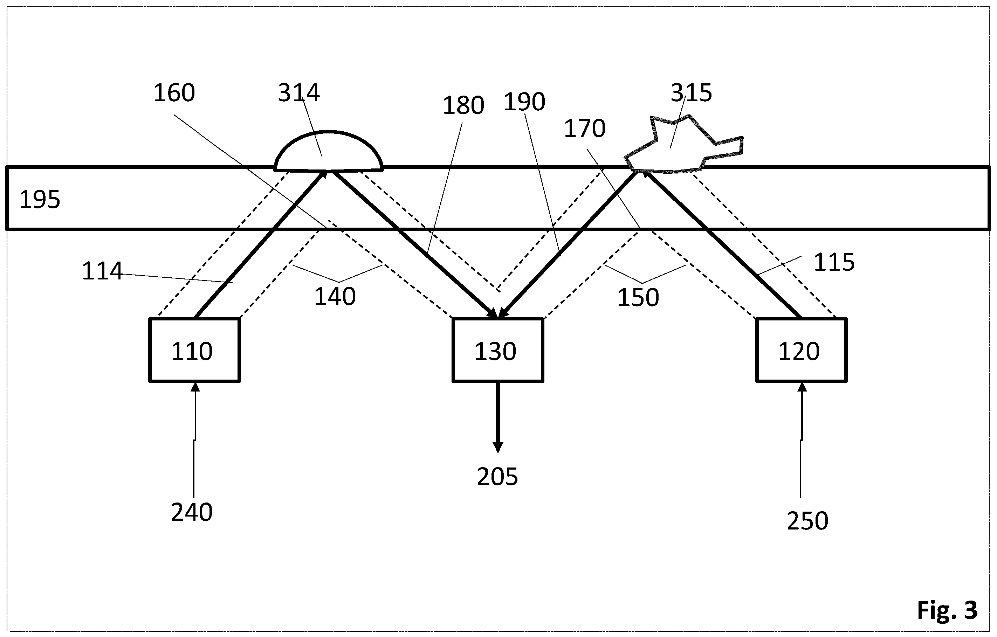

Diese Figur 3 zeigt eine Detailansicht der optischen Übertragungsstrecken (140, 150), die Licht von der ersten Strahlungsquelle (110) und der zweiten Strahlungsquelle (120) durch die Windschutzscheibe (195) leiten. Die erste Stelle (160) und die zweite Stelle (170) der Windschutzscheibe (195) sind in den Übertragungsstrecken (140, 150) positioniert. Die Messstrahlungen (180, 190) werden durch Regentropfen (314) oder Verschmutzungen (315) auf der Windschutzscheibe (195) in unterschiedlicher Weise beeinflusst, bevor sie vom Fotodetektor (130) erfasst werden.

Das erste Amplitudenmodulationssignal (240) steuert die erste Strahlungsquelle (110) und das zweite Amplitudenmodulationssignal (250) steuert die zweite Strahlungsquelle (120). Die modulierten Lichtstrahlen werden in die optischen Übertragungsstrecken (140, 150) eingespeist und durch die Windschutzscheibe (195) geleitet. Die Modulation der Lichtstrahlen ermöglicht eine genaue Differenzierung der empfangenen Signale.

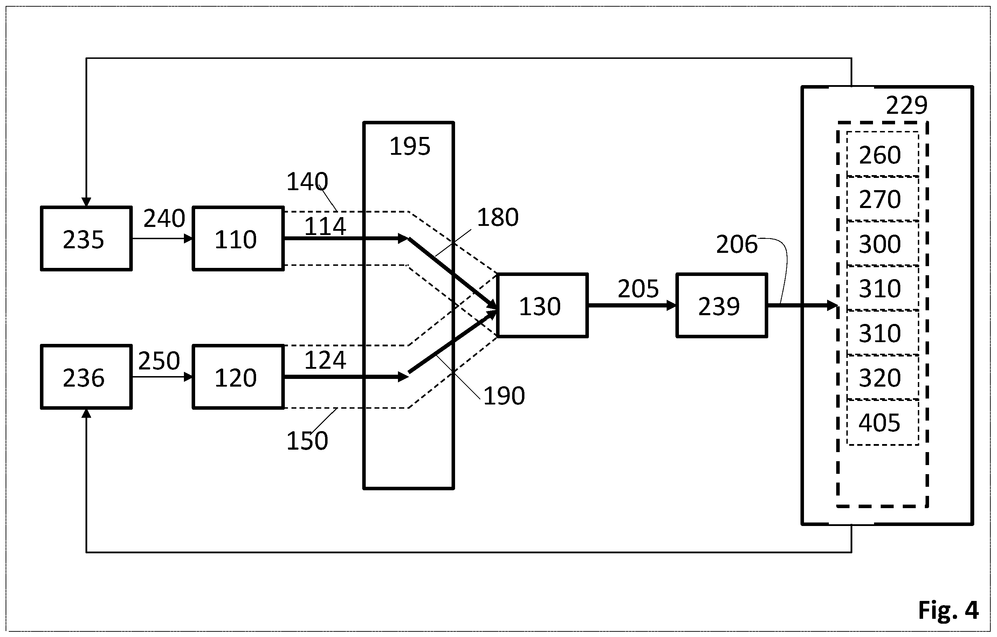

Diese Figur 4 stellt die Signalverarbeitung in der Steuervorrichtung (230) dar. Das Rechnersystem (229) der Steuervorrichtung (230) steuert über den Datenbus (237) den ersten Treiber (235). Das Rechnersystem (229) der Steuervorrichtung (230) steuert über den Datenbus (237) den zweiten Treiber (235).

Der erste Treiber (235) erzeugt in Abhängigkeit von der Steuerung durch das Rechnersystem (229) der Steuervorrichtung (230) das erste Amplitudenmodulationssignal (240).

Der zweite Treiber (236) erzeugt in Abhängigkeit von der Steuerung durch das Rechnersystem (229) der Steuervorrichtung (230) das zweite Amplitudenmodulationssignal (250).

Das erste Amplitudenmodulationssignal (240) steuert die erste Strahlungsquelle (110) und das zweite Amplitudenmodulationssignal (250) steuert die zweite Strahlungsquelle (120).

Die erste Strahlungsquelle (110) emittiert n Abhängigkeit von dem ersten Amplitudenmodulationssignal (240) einen ersten modulierten Lichtstrahl (114).

Die zweite Strahlungsquelle (120) emittiert n Abhängigkeit von dem zweiten Amplitudenmodulationssignal (250) einen zweiten modulierten Lichtstrahl (124).

Die erste Strahlungsquelle (110) speist den ersten modulierten Lichtstrahl (114) in die erste optische Übertragungsstrecke (140) ein.

Die zweite Strahlungsquelle (120) speist den zweiten modulierten Lichtstrahl (124) in die zweite optische Übertragungsstrecke (150) ein.

Die erste optische Übertragungsstrecke (140) leitet den ersten modulierten Lichtstrahl (114) durch die Windschutzscheibe (195). Regentropfen (314) und/oder Verschmutzungen (315) sowie die Windschutzscheibe (195) und ggf. weitere optische Funktionselemente und Störungen verändern den ersten modulierten Lichtstrahl (114) zu erster Messstrahlung (180).

Die zweite optische Übertragungsstrecke (150) leitet den zweiten modulierten Lichtstrahl (115) durch die Windschutzscheibe (195). Regentropfen (314) und/oder Verschmutzungen (315) sowie die Windschutzscheibe (195) und ggf. weitere optische Funktionselemente und Störungen verändern den zweiten modulierten Lichtstrahl (115) zu zweiter Messstrahlung (190).

Die erste optische Übertragungsstrecke (140) leitet die erste Messstrahlung (180) auf den Fotodetektor (130).

Die zweite optische Übertragungsstrecke (150) leitet die zweite Messstrahlung (190) auf den Fotodetektor (130).

Die erste Messstrahlung (180) und die zweite Messstrahlung (190) überlagern sich im Fotodetektor zu einer gemeinsamen Messtrahlung.

Der Fotodetektor (130) erzeugt aus der gemeinsamen Messtrahlung die Empfangssignale (205).

Die Fotodetektorschnittstelle (239) wandelt die Empfangssignale (205) des Fotodetektors (130) zu aufbereiteten Empfangssignalen (206).

Das Rechnersystem (229) erzeugt mittels computer- und/oder maschinenimplementierter Verfahren (405) das erste Messwertsignal (260) und das zweite Messwertsignal (270).

Die vorzugsweise zur ersten Modulation des ersten Amplitudenmodulationssignals (240) komplementäre Modulation des zweiten Amplitudenmodulationssignals (250) führt zu einer zur ersten Modulation der Intensität des ersten modulierten Lichtstrahls (114) komplementären Modulation des zweiten Lichtstrahls (124).

Das Rechnersystem (229) regelt die Amplituden des ersten modulierten Lichtstrahls (114) und des zweiten modulierten Lichtstrahls (124) mittels des computer- und/oder maschinenimplementierten Verfahrens (405)

Zum Ersten mittels eines ersten Regelwerts der Differenz der ersten Amplitude des ersten Amplitudenmodulationssignals (240) minus der Amplitude des zweiten Amplitudenmodulationssignals (250) vorzugsweise so aus, dass der sich ergebende Intensitätsverlauf der gemeinsamen Messstrahlung, die den Fotodetektor (130) trifft, einen ersten Anteil aufweist, der mit einem Wechselanteil synchron zur ersten Modulation des ersten modulierten Lichtstrahls (114) oder zur Modulation des zweiten modulierten Lichtstrahls (124) in einer vorbestimmten Amplitude umfasst und

Zum Zweiten mittels eines zweiten Regelwerts der Summe der ersten Amplitude des ersten Amplitudenmodulationssignals (240) plus der Amplitude des zweiten Amplitudenmodulationssignals (250) vorzugsweise so aus, dass der sich ergebende Intensitätsverlauf der gemeinsamen Messstrahlung, die den Fotodetektor (130) trifft, einen zweiten Gleichanteil mit einer vorbestimmten zweiten Amplitude umfasst.

Die Verwendung des ersten Regelwerts und des zweiten Regelwerts ermöglicht eine genaue Differenzierung der empfangenen Signale durch das Rechnersystem (229) der Steuervorrichtung (230) mittels eines computer- oder maschinenimplementierten Verfahrens.

Die veränderten Messstrahlungen (180, 190) werden vom Fotodetektor (130) in Empfangssignale (205) umgewandelt. Das Rechnersystem (229) der Steuervorrichtung (230) erzeugt mittels eines computer- und/oder maschinenimplementierten Verfahrens (405) aus den Empfangssignalen (205) bzw. aus den aufbereiteten Empfangssignalen (206) das erste Messwertsignal (260) und das zweite Messwertsignal (270). Bevorzugt liegen das erste Messwertsignal (260) und das zweite Messwertsignal (270) in einem Speicher (233, 234) des Rechensystems (229) als ein oder mehrere Datenwerte gespeichert vor und werden dort für die Verwendung und/oder Ausgabe durch das Rechnersystem (229) über die Datenschnittstelle (340) und den externen Datenbus (470) bereitgehalten oder durch das Rechnersystem (229) weiterverwendet. Vorschlagsgemäß verwendet das Rechnersystem (229) diese Messwertsignale (260, 270) mittels eines computer- oder maschinenimplementierten Verfahrens in einer Differenzbildung (300) und einer Summenbildung (310) verarbeitet, um ein Maß für die Wahrscheinlichkeit einer Beregnung (320) sowie ein Maß für die Dämpfung der Windschutzscheibe (330) abzuleiten. Bevorzugt speichert das Rechnersystem (229) das Ergebnis der Differenzbildung (300) und des Ergebnisses der Summenbildung (310) sowie die Wahrscheinlichkeit einer Beregnung (320) und das Maß für die Dämpfung der Windschutzscheibe (330) in einem Speicher (233, 234) des Rechensystems (229) als ein oder mehrere Datenwerte in diesen Speichern. Bevorzugt hält das Rechnersystem diese Daten in einem oder mehreren der Speicher (233, 234) für die Verwendung und/oder Ausgabe durch das Rechnersystem (229) über die Datenschnittstelle (340) und den externen Datenbus (470) bereit oder verwendet diese weiter.

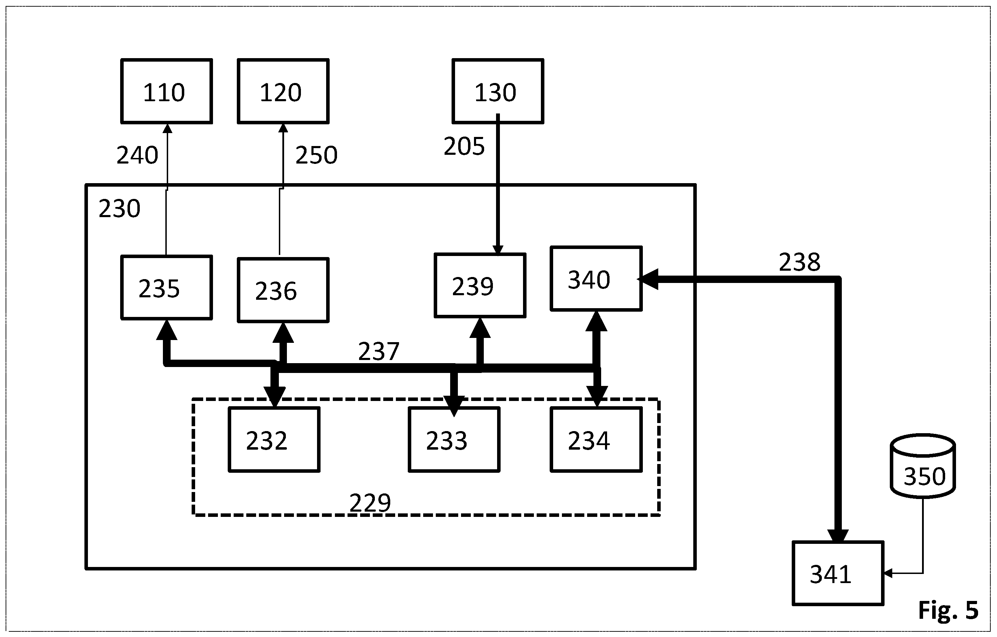

Diese Figur 5 entspricht der Figur 2. Figur 5 zeigt ein Szenario, in dem das Rechnersystem (229) der Steuervorrichtung (230) des Regensensors (100) mit einem externen System (341) über die Kommunikationsschnittstelle (340) und den externen Datenbus (470), der auch drahtlos und/oder drahtgestützt sein kann, verbunden ist. Das Rechnersystem (229) der Steuervorrichtung (230) ist so eingerichtet, dass sie Software-Updates (350) von dem einem externen System (341) empfangen, entschlüsseln, authentifizieren und installieren kann. Dies ermöglicht eine kontinuierliche Aktualisierung und Verbesserung der Sensordatenverarbeitung sowie der Systemleistung des Rechnersystems (229) der Steuervorrichtung (230) des Regensensors (100).

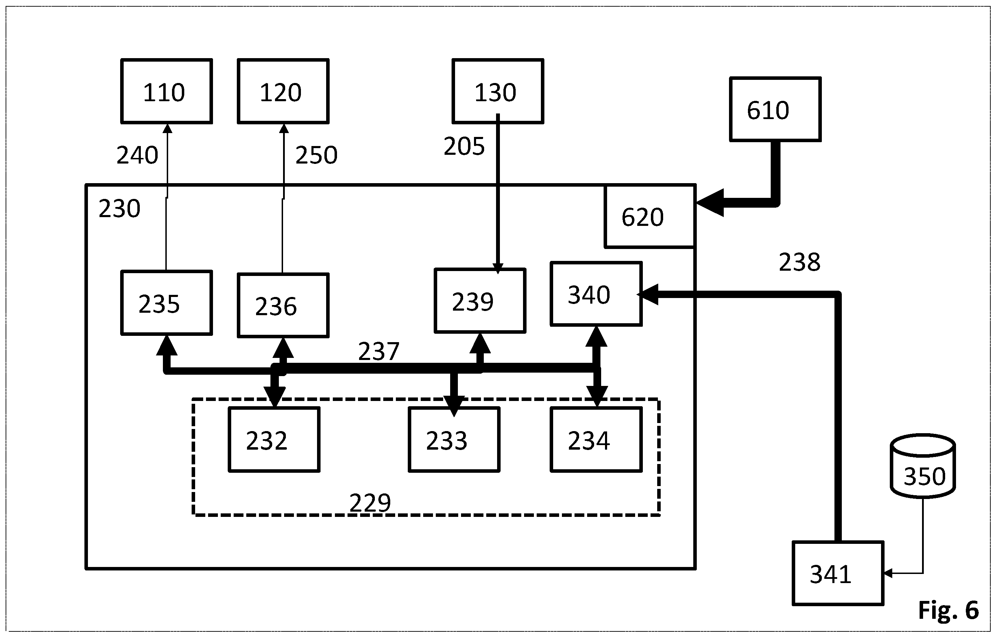

Diese Figur 6 zeigt ein Funktionsdiagramm des Energiemanagementsystems des Regensensors (100). Eine Energiereserve (610) kann die Steuervorrichtung und die übrigen Vorrichtungsteile des Regensensors (100) über eine Energieversorgungsvorrichtung (620), der beispielsweise einen oder mehrere Spannungsregler umfassen kann, mit Energie versorgen. Sofern das Rechnersystem (229) der Steuervorrichtung (230) eine Betriebsbedingung mittels eines computer- oder maschinenimplementierten Verfahrens erkennt, der eine Energieverbrauchsreduzierung erfordert, oder sofern das Rechnersystem (229) ein Kommando über den exterenen Datenbus (470) zum Energiesparen erhält, veranlasst das Rechnersystem (229) des Regensensors (100), dass der Regenssensor (100) einen Energiesparmodus (390) einnimmt. Im Energiesparmodus (390) reduziert die Steuervorrichtung (230) des Regensensors (100) automatisch die Leistung der Strahlungsquellen (110, 120), wenn das Rechnersystem (229) keine Regenaktivität mittels des computer- und/oder maschinenimplementierten Verfahrens (405) feststellt. Das Rechnersystem (229) der Steuervorrichtung (230) passt die Betriebsmodi an, um eine optimale Balance zwischen Energieverbrauch und Sensorempfindlichkeit zu erreichen. Vorzugsweise verfügt das Rechnersystem (229) über einen computer- oder maschinenimplementierten Zeitgeber, der dafür sorgt, dass der Regensensor in regelmäßigen Zeitabständen seinen Energiesparmodus verlässt, um diese Sensorempfindlichkeit aufrechtzuerhalten. Diese Zeitabstände können von Zuständen des Fahrzeugs (beispielsweise in Reihenfolge des abfallenden Energiebedarfs: Fahrt, Fahrbereitschaft, Parken, Lagerung / Verschiffung) abhängen.

### Figur 7

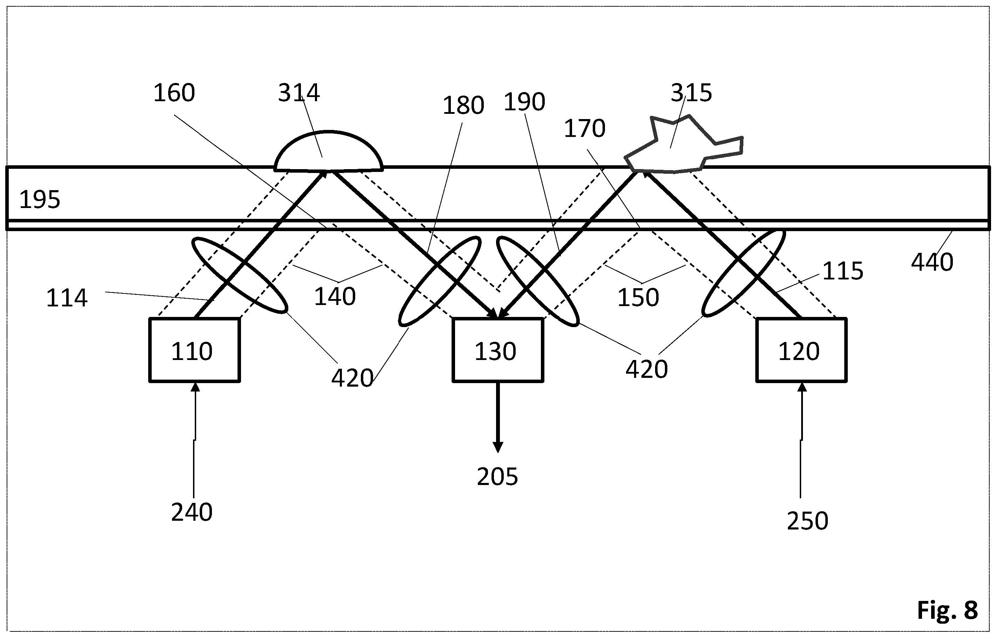

Diese Figur 8 stellt die Schnittstelle des Regensensors (100) zu einem beispielhaften, vereinfachten und nur symbolischen Fahrzeugnetzwerk dar. Die Steuervorrichtung (230) des Regensensors (230) kommuniziert über die Kommunikationsschnittstelle (340) und ist mit dem Datenbus (470) des Fahrzeugs verbunden. Über eine drahtlose Schnittstelle (342) können Sensordaten an ein Smartphone (343) oder andere mobile Endgeräte übertragen werden.

### Figur 8

Diese Figur 8 zeigt eine erweiterte Ansicht der optischen Komponenten des Regensensors. Die optischen Übertragungsstrecken (140, 150) sind beispielhaft mit mehreren Fokussierlinsen (420) ausgestattet, die die Lichtstrahlen auf den Fotodetektor (130) du die Messpunkte (160, 170) fokussiert. Eine Antireflexionsbeschichtung (440) minimiert Signalverluste durch Reflexionen, um die Genauigkeit der Messungen zu verbessern.

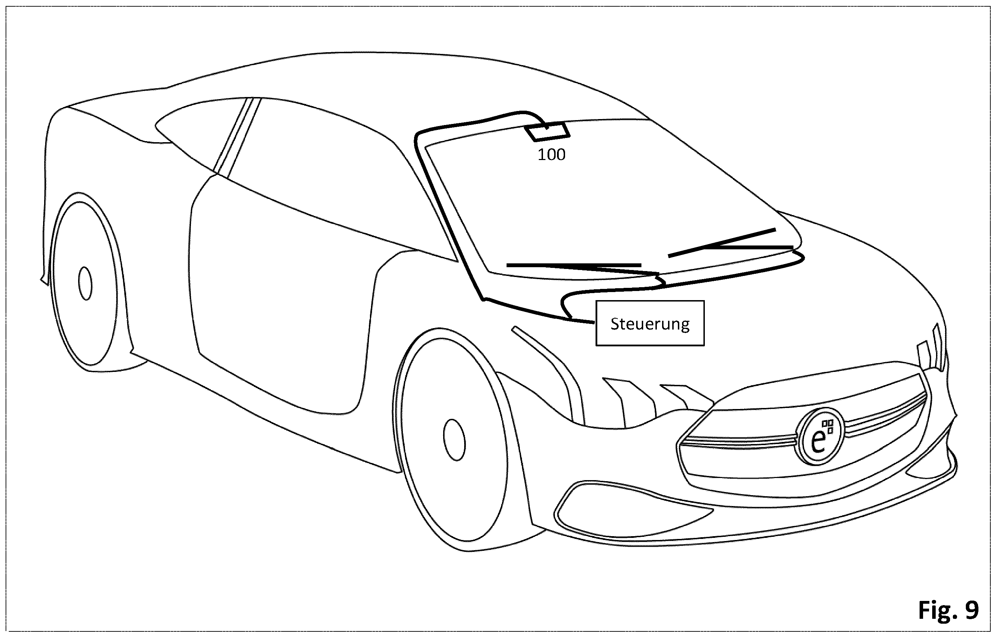

Diese Figur 9 zeigt ein Beispiel für die Anwendung des Regensensors (900) in einem autonomen Fahrzeug. Der Sensor (100) übermittelt die Sensordaten des Regensensors (100) an die Fahrzeugsteuerung (900), die basierend auf den erkannten Regenintensitäten und Verschmutzungsgrade die Scheibenwischerbewegungen, die Benetzung durch die Scheibenwaschanlage, die Scheinwerferwaschanlage, eine Bremsleuchtenwaschanlage, eine Blinkerwaschanlage, eine Rückfahrscheinwerferwaschanlage, eine Kameraobjektivwaschanlage, die Scheinwerfer, die Rücklichter steuert und gegebenenfalls die Geschwindigkeit des Fahrzeugs automatisch anpasst.

Die obige Beschreibung erhebt keinen Anspruch auf Vollständigkeit und beschränkt diese Offenbarung nicht auf die gezeigten Beispiele. Andere Variationen zu den offengelegten Beispielen können von denjenigen, die über gewöhnliche Fachkenntnisse auf dem Gebiet verfügen, anhand der Zeichnungen, der Offenbarung und der Ansprüche verstanden und ausgeführt werden. Die unbestimmten Artikel "ein" oder "eine" und dessen Flexionen schließen eine Vielzahl nicht aus, während die Erwähnung einer bestimmten Anzahl von Elementen nicht die Möglichkeit ausschließt, dass mehr oder weniger Elemente vorhanden sind. Eine einzige Einheit kann die Funktionen mehrerer in der Offenbarung genannter Elemente erfüllen, und umgekehrt können mehrere Elemente die Funktion einer Einheit erfüllen. Zahlreiche Alternativen, Äquivalente, Variationen und Kombinationen sind möglich, ohne dass der Anwendungsbereich der vorliegenden Offenbarung verlassen wird.

Soweit nichts anders angegeben ist, können sämtliche Merkmale der vorliegenden Erfindung frei miteinander kombiniert werden. Dies betrifft die gesamte hier vorgelegte Schrift. Auch die in der Figurenbeschreibung beschriebenen Merkmale können, soweit nichts anderes angegeben ist, als Merkmale der Erfindung frei mit den übrigen Merkmalen kombiniert werden. Eine Beschränkung einzelner Merkmale der Ausführungsbeispiele auf die Kombination mit anderen Merkmalen der Ausführungsbeispiele ist dabei ausdrücklich nicht vorgesehen. Außerdem können gegenständliche Merkmale der Vorrichtung umformuliert auch als Verfahrensmerkmale Verwendung finden und Verfahrensmerkmale umformuliert als gegenständliche Merkmale der Vorrichtung. Eine solche Umformulierung ist somit automatisch mit offenbart.

In der vorausgehenden detaillierten Beschreibung wird auf die beigefügten Zeichnungen verwiesen. Die Beispiele in der Beschreibung und den Zeichnungen sollten als illustrativ betrachtet werden und sind nicht als einschränkend für das beschriebene spezifische Beispiel oder Element zu betrachten. Aus der vorausgehenden Beschreibung und/oder den Zeichnungen und/oder den Ansprüchen können durch Abänderung, Kombination oder Variation bestimmter Elemente mehrere Beispiele abgeleitet werden. Darüber hinaus können Beispiele oder Elemente, die nicht wörtlich beschrieben sind, von einer fachkundigen Person aus der Beschreibung und/oder den Zeichnungen abgeleitet werden.

### Bezugszeichenliste

100 - Regensensor
110 - Erste Strahlungsquelle
111 - Erste LED
112 - Erste Laserdiode
120 - Zweite Strahlungsquelle
121 - Zweite LED
122 - Zweite Laserdiode
130 - Fotodetektor
131 - Fotodetektor-Array
132 - Fotodiode
133 - Fotodioden-Array
140 - Erste optische Übertragungsstrecke
150 - Zweite optische Übertragungsstrecke
160 - Erste Stelle der Windschutzscheibe
170 - Zweite Stelle der Windschutzscheibe
180 - Erste Messstrahlung
190 - Zweite Messstrahlung
200 - Veränderte erste Messstrahlung
210 - Veränderte zweite Messstrahlung
220 - Empfangssignal
230 - Steuervorrichtung
231 - Rechnersystem
232 - CPU
233 - Flüchtiger Speicher
234 - Nichtflüchtiger Speicher
240 - Erste Amplitudenmodulationssignal
250 - Zweite Amplitudenmodulationssignal
260 - Erstes Messwertsignal
270 - Zweites Messwertsignal
280 - Erstes Messwert für Dämpfung
290 - Zweites Messwert für Dämpfung
300 - Differenzbildungseinheit
310 - Summenbildungseinheit
320 - Maß für die Wahrscheinlichkeit einer Beregnung
330 - Maß für die Dämpfung der Windschutzscheibe
340 - Kommunikationsschnittstelle
341 - Verschlüsselte Kommunikation
342 - Drahtlose Schnittstelle (Bluetooth, WLAN)
350 - Software-Update-Modul
360 - Diagnose-Schnittstelle
370 - Kalibriereinheit
380 - Selbsttesteinheit
390 - Energiesparmodus
400 - Optisches Filter
410 - Linsen für optische Übertragungsstrecke
420 - Fokussierlinse
430 - Reflexionsbeschichtung
440 - Antireflexionsbeschichtung
450 - Variabler Lichtweg
460 - Externe Datenquelle (GPS, Wetterdaten)
470 - Schnittstelle für Fahrzeugnetzwerk
480 - Smartphone-App-Schnittstelle
490 - Cloud-Dienst-Schnittstelle
500 - Blitzereignis-Analysemodul
510 - Sicherheitsfunktion
520 - Notstromversorgung
530 - Fehlererkennungseinheit
540 - Mustererkennungseinheit
550 - Automatischer Energiemanagementmodul
560 - USB-Schnittstelle
570 - Mobilfunk-Schnittstelle
580 - Speicher für Langzeitdaten
590 - Lüftungsregelungsschnittstelle

## Patentansprüche

1. Regensensor (100) für ein Kraftfahrzeug, umfassend:
eine erste Strahlungsquelle (110), die insbesondere zumindest eine erste LED oder insbesondere zumindest eine erste Laserdiode umfasst,
eine zweite Strahlungsquelle (120), die insbesondere zumindest eine zweite LED oder insbesondere zumindest eine zweite Laserdiode umfasst,
zumindest einen Fotodetektor (130) und/oder zumindest ein Fotodetektor-Array, insbesondere zumindest eine Fotodiode und/oder zumindest ein Fotodioden-Array,
zumindest eine erste optische Übertragungsstrecke (140), in die eine erste Stelle (160) der Windschutzscheibe (195) des Fahrzeugs optisch aktiv eingefügt ist,
zumindest eine zweite optische Übertragungsstrecke (150), in die eine zweite Stelle (170) der Windschutzscheibe (195) des Fahrzeugs optisch aktiv eingefügt ist, eine Steuervorrichtung (230), die ein Rechnersystem mit einer CPU und einem oder mehreren flüchtigen und nichtflüchtigen Speichern umfasst, die ein oder mehrere computerund/oder maschinenimplementiertes Verfahren ausführen,
wobei die erste Strahlungsquelle in die erste optische Übertragungsstrecke zumindest eine erste Messstrahlung einspeist,
wobei die zweite Strahlungsquelle in die zweite optische Übertragungsstrecke zumindest eine zweite Messstrahlung einspeist,
wobei die erste Einstrahlung der ersten Strahlungsquelle mit einem ersten Amplitudenmodulationssignal (240) moduliert ist,
wobei die zweite Einstrahlung der zweiten Strahlungsquelle mit einem zweiten Amplitudenmodulationssignal (250) moduliert ist,
wobei die erste Stelle der Windschutzscheibe (160) die erste Messstrahlung zu einer veränderten ersten Messstrahlung (180) verändert,
wobei die zweite Stelle der Windschutzscheibe (170) die zweite Messstrahlung zu einer veränderten zweiten Messstrahlung (190) verändert,
wobei die erste Übertragungsstrecke den Fotodetektor und/oder das Fotodetektor-Array mit der ersten veränderten Messstrahlung bestrahlt,
wobei die zweite Übertragungsstrecke den Fotodetektor und/oder das Fotodetektor-Array mit der zweiten veränderten Messstrahlung bestrahlt,
wobei die Steuervorrichtung eingerichtet ist, das erste Amplitudenmodulationssignal (240) und das zweite Amplitudenmodulationssignal (250) zu erzeugen,
wobei die Steuervorrichtung (230) eingerichtet ist, in Abhängigkeit von den Amplitudenmodulationssignalen ein erstes und ein zweites Messwertsignal sowie erste und zweite Messwerte für die Dämpfung der Übertragungsstrecken zu erzeugen,
wobei die Steuervorrichtung (230) eingerichtet ist, durch Differenzbildung zwischen den ersten und zweiten Messwertsignalen und/oder Messwerten ein Maß für die Wahrscheinlichkeit einer Beregnung abzuleiten,
und durch Summenbildung ein Maß für die Dämpfung der Windschutzscheibe, insbesondere durch Verschmutzung oder insbesondere durch Tau als spezieller Verschmutzung und/oder Vereisung als weiterer spezieller Verschmutzung, abzuleiten.

2. Regensensor nach Anspruch 1, **dadurch gekennzeichnet, dass** ein oder mehrere Fotodetektoren einen Fotomultiplier oder eine Fotodiode oder eine SPAD-Diode oder eine AVD-Diode oder eine PN-Diode umfassen.

3. Regensensor nach Anspruch 1 oder 2, **dadurch gekennzeichnet, dass** die erste und zweite Messstrahlung mit unterschiedlichen Wellenlängen arbeiten.

4. Regensensor nach einem der Ansprüche 1-3, **dadurch gekennzeichnet, dass** die Strahlungsquellen als gepulste Lichtquellen, insbesondere mittels einer Pulsmodulierten Intensitätsmodulation wie beispielsweise PWM (Pulsweitenmodulation), PDM (Pulsdichtemodulation), PFM (Pulsfrequenzmodulation), betrieben werden, um eine höhere Signalstärke zu erreichen.

5. Regensensor nach einem Ansprüche 1-4, **dadurch gekennzeichnet, dass** die Steuervorrichtung eine Temperaturkompensation für die Strahlungsquellen und Fotodetektoren umfasst, wobei insbesondere die Temperaturkompensation einen computer- oder maschinenimplementierten Algorithmus zur Temperaturkompensation und zwar insbesondere ein computer- oder maschinenimplementiertes Verfahren der künstlichen Intelligenz und zwar insbesondere ein computer- oder maschinenimplementiertes neuronales Netzwerkmodell umfassen kann.

6. Regensensor nach einem der Ansprüche 1-5, **dadurch gekennzeichnet, dass** die optischen Übertragungsstrecken ein oder mehrere jeweilige optische Funktionselemente zur Beeinflussung der jeweiligen Messtrahlung in der jeweiligen optischen Übertragungsstrecke umfassen.

7. Regensensor nach einem der Ansprüche 1-6, **dadurch gekennzeichnet, dass** die ein oder mehrere optische Übertragungsstrecken jeweils einen variablen Lichtweg umfassen, der durch einen Aktuator insbesondere durch die CPU der Steuervorrichtung des Regensensors mittels computer- oder maschinenimplementierter Verfahren eingestellt werden kann.

8. Regensensor nach einem der Ansprüche 1-7, **dadurch gekennzeichnet, dass** die Steuervorrichtung einen Algorithmus zur Mustererkennung umfasst, der die Form und Größe von Regentropfen auf der Windschutzscheibe analysiert.

9. Regensensor nach einem der Ansprüche 1-8, **dadurch gekennzeichnet, dass** die Steuervorrichtung eine Fehlerkorrekturfunktion umfasst, die Fehlmessungen aufgrund von Schmutz auf der Windschutzscheibe erkennt und kompensiert.

10. Regensensor nach einem der Ansprüche 1-9, **dadurch gekennzeichnet, dass** die optischen Übertragungsstrecken eine variable Fokussierlinse umfassen, die automatisch auf die optimale Position eingestellt wird.

11. Regensensor nach einem der Ansprüche 1-10, **dadurch gekennzeichnet,**
**dass** der Regensensor dazu eingerichtet ist in aufeinanderfolgenden, nicht überlappenden ersten und zweiten Messzyklen zu arbeiten,
wobei der Regensensor dazu eingerichtet ist, in den ersten Messzyklen durch Differenzbildung zwischen den ersten und zweiten Messwertsignalen und/oder Messwerten ein Maß für die Wahrscheinlichkeit einer Beregnung abzuleiten,
wobei der Regensensor dazu eingerichtet ist, in den ersten Messzyklen durch Summenbildung ein Maß für die Dämpfung der Windschutzscheibe, insbesondere durch Verschmutzung oder insbesondere durch Tau als spezieller Verschmutzung und/oder Vereisung als weiterer spezieller Verschmutzung, abzuleiten.

12. Fahrzeug mit einem Regensensor nach einem der Ansprüche 1-11.

13. Garage oder Fahrzeugabstellplatz oder Waschanlage,
wobei diese dazu eingerichtet sind, ein Fahrzeug nach Anspruch 12 zu identifizieren und
wobei diese dazu eingerichtet sind, Steuerdaten von dem einem oder mehreren Servern nach einem der zwei vorausgehenden Ansprüche betreffend Server zu erhalten und
wobei diese dazu eingerichtet sind, einen Waschvorgang in Abhängigkeit von dem einen oder den mehreren Messwerten des geschätzten Gesamtverschmutzungszustands und/oder insbesondere von dem einen oder den mehreren Zeitstempeln, die von einem oder mehreren Regensensoren nach einem der Ansprüche 1-11 ermittelt wurden, durchzuführen.

14. Verfahren zur Steuerung eines Regensensors nach einem Ansprüche 1-11, umfassend die Schritte:
Erzeugen eines ersten Amplitudenmodulationssignals und eines zweiten Amplitudenmodulationssignals,
Modulation der ersten Messstrahlung entsprechend dem ersten Amplitudenmodulationssignal,
Modulation der zweiten Messstrahlung entsprechend dem zweiten Amplitudenmodulationssignal,
Empfang der ersten veränderten Messstrahlung und der zweiten veränderten Messstrahlung nach den Veränderungen durch die Windschutzscheibe durch den einen oder die mehreren Fotodetektoren und/oder das eine oder die mehreren Fotodetektor-Arrays,
Erzeugen von ersten und zweiten Messwertsignalen und/oder ersten und zweiten Messwerten für die Dämpfung der Übertragungsstrecken, insbesondere durch Korrelation, insbesondere in einem Lock-In-Verstärker oder einer zum Lockin-Verstärker funktionsäquivalenten Vorrichtung, wie insbesondere einem oder mehreren Matched-Filtern und/oder Optimalfiltern,
Ableiten eines Maßes für die Wahrscheinlichkeit einer Beregnung durch Differenzbildung der Messwertsignale und/oder Messwerte,
Ableiten eines Maßes für die Dämpfung der Windschutzscheibe durch Summenbildung der Messwertsignale und/oder Messwerte.

15. Computerprogrammprodukt, umfassend Programmcodes, die bei Ausführung auf einer CPU einer Vorrichtung gemäß einem der Ansprüche 1-12 ein Verfahren gemäß Anspruch 14 zur Ausführung bringen.

## Claims

1. Rain sensor (100) for a motor vehicle, comprising:
a first radiation source (110), which comprises, in particular, at least one first LED or, in particular, at least one first laser diode,
a second radiation source (120), which comprises, in particular, at least one second LED or in particular at least one second laser diode,
at least one photodetector (130) and/or at least one photodetector array, in particular at least one photodiode and/or at least one photodiode array,
at least a first optical transmission path (140) in which a first location (160) of the vehicle's windshield is optically actively incorporated,
at least a second optical transmission path (150) in which a second location of the vehicle's windshield (195) is optically inserted,
a control device (230) comprising a computer system with a CPU and one or more volatile and non-volatile memories that execute one or more computer- and/or machine-implemented methods,
wherein the first radiation source feeds at least one first measurement beam in the first optical transmission path,
wherein the second radiation source feeds at least a second measurement beam into the second optical transmission path,
wherein the first radiation from the first radiation source is modulated with a first amplitude-modulated signal (240),
wherein the second radiation from the second radiation source is modulated with a second amplitude modulation signal (250),
wherein the first location of the windshield (160) modifies the first measurement radiation into a modified first measurement radiation (180),
wherein the second location of the windshield (170) modifies the second measurement radiation into a modified second measurement radiation (190),
wherein the first transmission path irradiates the photodetector and/or the photodetector array with the first modified measurement radiation,
wherein the second transmission path irradiates the photodetector and/or the photodetector array with the second modified measurement radiation,
wherein the control device is configured to generate the first amplitude modulation signal (20) and the second amplitude modulation signal (250),
wherein the control device (230) is configured to generate, depending on the amplitude-modulated signals, a first and a second measured value signal as well as first and second measured values for the attenuation of the transmission paths,
wherein the control device (230) is configured to derive a measure of the probability of precipitation by calculating the difference between the first and second measured value signals and/or measured values,
and to derive a measure of the attenuation of the windshield, in particular due to soiling or in particular due to dew as a specific form of contamination and/or icing as a further specific form of contamination, by summing.

2. Rain sensor according to claim 1, **characterized in that** one or more photodetectors comprise a photomultiplier or a photodiode or an SPAD diode or an AVD diode or a PN diode.

3. Rain sensor according to claim 1 or 2, **characterized in that** the first and second measurement radiation operate at different wavelengths.

4. Rain sensor according to any one of claims 1-3, **characterized in that** the radiation sources are operated as pulsed light sources, in particular by means of pulse-modulated intensity modulation such as, for example, PWM (pulse width modulation), PDM (pulse density modulation), PFM (pulse frequency modulation), in order to achieve a higher signal strength.

5. A rain sensor according to any one of claims 1-4, **characterized in that** the control device comprises temperature compensation for the radiation sources and photodetectors, wherein in particular, the temperature compensation can comprise a computer- or machine-implemented algorithm for temperature compensation, and specifically a computer- or machine-implemented method of artificial intelligence, and in particular a computer- or machine-implemented neural network model.

6. A rain sensor according to any one of claims 1-5, **characterized in that** the optical transmission paths comprise one or more respective optical functional elements for influencing the respective measurement radiation in the respective optical transmission path.

7. A rain sensor according to any one of claims 1-6, **characterized in that** the one or more optical transmission paths each comprise a variable optical path length that can be adjusted by an actuator, in particular by the CPU of the rain sensor's control device, using computeror machine-implemented methods.

8. A rain sensor according to any one of claims 1-7, **characterized in that** the control device includes a pattern recognition algorithm that analyzes the shape and size of raindrops on the windshield.

9. A rain sensor according to any one of claims 1-8, **characterized in that** the control device includes an error correction function that detects and compensates for measurement errors caused by dirt on the windshield.

10. A rain sensor according to any one of claims 1-9, **characterized in that** the optical transmission paths include a variable focus lens that is automatically adjusted to the optimal position.

11. A rain sensor according to any one of claims 1-10, **characterized in that** the rain sensor is configured to operate in successive, non-overlapping first and second measurement cycles, wherein the rain sensor is configured to derive, in the first measurement cycles, by calculating the difference between the first and second measurement signals and/or measurement values a measure of the probability of rainfall,
wherein the rain sensor is configured to derive, in the first measurement cycles, by summing a measure of the attenuation of the windshield, in particular due to contamination or, in particular, due to dew as a specific type of contamination and/or icing as a further specific type of contamination.

12. A vehicle comprising a rain sensor according to any one of claims 1 to 11.

13. A garage, parking space, or car wash,
wherein these are configured to identify a vehicle according to claim 12 and
wherein these are configured to receive control data from the one or more servers according to one of the two preceding claims relating to servers, and
wherein they are configured to perform a washing operation based on the one or more measured values of the estimated overall soiling condition and/or, in particular, on the one or more timestamps determined by one or more rain sensors according to any of claims 1-11.

14. A method for controlling a rain sensor according to any one of claims 1-11, comprising the steps of:
generating a first amplitude-modulated signal and a second amplitude-modulated signal, modulating the first measurement radiation in accordance with the first amplitude-modulated signal,
modulating the second measurement radiation in accordance with the second amplitude modulation signal,
receiving the first modulated measurement radiation and the second modulated measurement radiation after the modulations through the windshield by the one or more photodetectors and/or the one or more photodetector arrays,
generating first and second measured value signals and/or first and second measured values for the attenuation of the transmission paths, in particular by correlation, in particular in a lock-in amplifier or a device functionally equivalent to a lock-in amplifier, such as in particular one or more matched filters and/or optimal filters,
deriving a measure of the probability of rainfall by taking the difference of the measured value signals and/or measured values,
deriving a measure of the windscreen's attenuation by summing the measured value signals and/or measured values.

15. A computer program product comprising program code that, when executed on a CPU of a device according to any one of claims 1-12, performs a method according to claim 14.

## Revendications

1. Capteur de pluie (100) pour un véhicule automobile, comprenant :
une première source de rayonnement (110) comprenant notamment au moins une première LED ou notamment au moins une première diode laser,
une deuxième source de rayonnement (120) comprenant notamment au moins une deuxième LED ou notamment au moins une deuxième diode laser,
au moins un photodétecteur (130) et/ou au moins un réseau de photodétecteurs, notamment au moins une photodiode et/ou au moins un réseau de photodiodes,
au moins un premier trajet de transmission optique (140) dans lequel un premier emplacement (160) du pare-brise du véhicule est inséré de manière optiquement active,
au moins un deuxième trajet de transmission optique (150) dans lequel un deuxième emplacement du pare-brise (195) du véhicule,
un dispositif de commande (230) comprenant un système informatique avec une unité centrale (CPU) et une ou plusieurs mémoires volatiles et non volatiles, qui exécutent un ou plusieurs procédés mis en œuvre par ordinateur et/ou par machine,
la première source de rayonnement injectant dans le premier trajet de transmission optique au moins un premier rayonnement de mesure,
la deuxième source de rayonnement injectant dans le deuxième trajet de transmission optique au moins un deuxième rayonnement de mesure,
le premier rayonnement de la première source de rayonnement étant modulé par un premier signal de modulation d'amplitude (240),
le deuxième rayonnement de la deuxième source de rayonnement étant modulé par un deuxième signal de modulation d'amplitude (250),
la première partie du pare-brise (160) transformant le premier rayonnement de mesure en un premier rayonnement de mesure modifié (180),
la deuxième partie du pare-brise (170) transformant le deuxième rayonnement de mesure en un deuxième rayonnement de mesure modifié (190),
la première ligne de transmission irradiant le photodétecteur et/ou le réseau de photodétecteurs avec le premier rayonnement de mesure modifié,
la deuxième ligne de transmission irradiant le photodétecteur et/ou le réseau de photodétecteurs avec le deuxième rayonnement de mesure modifié,
le dispositif de commande étant agencé pour générer le premier signal de modulation d'amplitude (240) et le deuxième signal de modulation d'amplitude (250),
le dispositif de commande (230) étant conçu pour générer, en fonction des signaux de modulation d'amplitude, un premier et un deuxième signal de mesure ainsi qu'une première et une deuxième valeur de mesure de l'atténuation des liaisons de transmission,
le dispositif de commande (230) étant conçu pour déduire, par calcul de la différence entre les premier et deuxième signaux de mesure et/ou valeurs de mesure, une mesure de la probabilité d'arrosage, et, par sommation, de déduire une mesure de l'atténuation du pare-brise, notamment due à un encrassement ou notamment à de la rosée en tant qu'encrassement spécifique et/ou au givrage en tant qu'autre encrassement spécifique.

2. Capteur de pluie selon la revendication 1, **caractérisé en ce qu'**un ou plusieurs photodétecteurs comprennent un photomultiplicateur ou une photodiode ou une diode SPAD ou une diode AVD ou une diode PN.

3. Capteur de pluie selon la revendication 1 ou 2, **caractérisé en ce que** les premier et deuxième rayonnements de mesure fonctionnent à des longueurs d'onde différentes.

4. Capteur de pluie selon l'une des revendications 1 à 3, **caractérisé en ce que** les sources de rayonnement fonctionnent comme des sources de lumière pulsée, en particulier au moyen d'une modulation d'intensité pulsée telle que, par exemple, la modulation de largeur d'impulsion (PWM), la modulation de densité d'impulsion (PDM) ou la modulation de fréquence d'impulsion (PFM), afin d'obtenir une intensité de signal plus élevée.

5. Capteur de pluie selon l'une des revendications 1 à 4, **caractérisé en ce que** le dispositif de commande comprend une compensation de température pour les sources de rayonnement et les photodétecteurs, la compensation de température peut comprendre notamment un algorithme de compensation de température mis en œuvre par ordinateur ou par machine, et plus précisément un modèle de réseau neuronal d'intelligence artificielle mis en œuvre par ordinateur ou , et plus particulièrement un modèle de réseau neuronal mis en œuvre par ordinateur ou par machine.

6. Capteur de pluie selon l'une des revendications 1 à 5, **caractérisé en ce que** les liaisons de transmission optique comprennent un ou plusieurs éléments fonctionnels optiques respectifs destinés à modifier le rayonnement de mesure correspondant dans la liaison de transmission optique correspondante.

7. Capteur de pluie selon l'une des revendications 1 à 6, **caractérisé en ce que** la ou les lignes de transmission optique comprennent chacune un trajet optique variable qui peut être réglé par un actionneur, en particulier par l'unité centrale (CPU) du dispositif de commande du capteur de pluie, au moyen de procédés mis en œuvre par ordinateur ou par machine.

8. Capteur de pluie selon l'une des revendications 1 à 7, **caractérisé en ce que** le dispositif de commande comprend un algorithme de reconnaissance de formes qui analyse la forme et la taille des gouttes de pluie sur le pare-brise.

9. Capteur de pluie selon l'une des revendications 1 à 8, **caractérisé en ce que** le dispositif de commande comprend une fonction de correction d'erreur qui détecte et compense mesures erronées dues à la présence de salissures sur le pare-brise.

10. Capteur de pluie selon l'une des revendications 1 à 9, **caractérisé en ce que** les lignes de transmission optiques comprennent une lentille de focalisation variable qui est automatiquement réglée sur la position optimale.

11. Capteur de pluie selon l'une des revendications 1 à 10, **caractérisé en ce que**
le capteur de pluie est conçu pour fonctionner selon des premier et deuxième cycles de mesure successifs et non superposés,
le capteur de pluie étant conçu pour, au cours des premiers cycles de mesure, déduire une mesure de la probabilité de pluie à partir de la différence entre les premier et deuxième signaux de mesure et/ou des valeurs mesurées,
le capteur de pluie étant agencé pour dériver, au cours des premiers cycles de mesure, par somme, une mesure de l'atténuation du pare-brise, en particulier due à un encrassement ou, plus précisément, à de la rosée en tant qu'encrassement spécifique et/ou au givrage en tant qu'autre encrassement spécifique.

12. Véhicule équipé d'un capteur de pluie selon l'une des revendications 1 à 11.

13. Garage, aire de stationnement ou station de lavage,
ces installations étant conçues pour identifier un véhicule selon la revendication 12 et étant conçues pour recevoir des données de commande provenant d'un ou de plusieurs serveurs selon l'une des deux revendications précédentes concernant les serveurs, et qui sont conçus pour effectuer un cycle de lavage en fonction de la ou des valeurs mesurées de l'état de salissure global estimé et/ou, en particulier, de l'horodatage ou des horodatages déterminés par un ou plusieurs capteurs de pluie selon l'une des revendications 1 à 11.

14. Procédé de commande d'un capteur de pluie selon l'une des revendications 1 à 11, comprenant les étapes suivantes :
génération d'un premier signal de modulation d'amplitude et d'un deuxième signal de modulation d'amplitude,
modulation du premier rayonnement de mesure en fonction du premier signal de modulation d'amplitude,
modulation du deuxième rayonnement de mesure en fonction du deuxième signal de modulation d'amplitude,
réception du premier rayonnement de mesure modifié et du deuxième rayonnement de mesure modifié après les modifications subies à travers le pare-brise par le ou les photodétecteurs et/ou le ou les réseaux de photodétecteurs,
génération de premier et deuxième signaux de mesure et/ou de première et deuxième valeurs de mesure pour l'atténuation des voies de transmission, notamment par corrélation, en particulier dans un amplificateur à verrouillage de phase ou un dispositif fonctionnellement équivalent à un amplificateur à verrouillage de phase, tel que notamment un ou plusieurs filtres adaptés et/ou filtres optimaux,
détermination d'une mesure de la probabilité de pluie par différenciation des signaux de mesure et/ou des valeurs de mesure,
détermination d'une mesure de l'atténuation du pare-brise par sommation des signaux de mesure et/ou des valeurs de mesure.

15. Produit logiciel comprenant des codes de programme qui, lorsqu'ils sont exécutés sur une unité centrale d'un dispositif selon l'une des revendications 1 à 12, mettent en œuvre un procédé selon la revendication 14.
